# EUROPÄISCHE PATENTANMELDUNG

(11) **EP 1 619 403 A2**
(43) Veröffentlichungstag der Anmeldung: **25.01.2006**
(21) Anmeldenummer: 05013193.7
(22) Anmeldetag: 18.06.2005
(51) Int. Cl.: F16D 23/14

(54) **Ausrücklager zum Betätigen einer Kupplung**

(30) Priorität: 02.07.2004 DE 102004032072
(71) Anmelder: LuK Lamellen und Kupplungsbau Beteiligungs KG, 77815 Bühl (DE)
(72) Erfinder: Rammhofer, Thomas, 77880 Sasbach (DE)

(57) **Zusammenfassung**

Es wird ein Ausrücklager zum Betätigen einer Kupplung in einem Antriebsstrang eines Fahrzeuges mit einem umlaufenden Lagerring (1) und einem stehenden Lagerring (2) vorgeschlagen, zwischen denen Wälzkörper (3) geführt sind, wobei ein Lagerring über die Reibfläche (5) mittels einer Scheibe (8) mit einer Tellerfeder (nicht dargestellt) der Kupplung gekoppelt ist und wobei die jeweils der Tellerfeder und dem Lagerring zugewandte Fläche der Scheibe als Reibflächen wirken, wobei der Reibwert wenigstens einer Reibfläche der Scheibe zumindest zeitweise veränderbar ist.

## Beschreibung

Die vorliegende Erfindung betrifft ein Ausrücklager zum Betätigen einer Kupplung in einem Antriebsstrang eines Fahrzeuges mit einem umlaufenden Lagerring und einem stehenden Lagerring, zwischen denen Wälzkörper geführt sind, wobei zumindest ein Lagerring über eine Scheibe mit einer Tellerfeder der Kupplung gekoppelt ist und wobei die der Tellerfeder und dem Lagerring zugewandten Flächen der Scheibe als Reibflächen wirken.

Aus der Fahrzeugtechnik sind Ausrücklager zur Betätigung einer Kupplung hinreichend bekannt. Beispielsweise ist aus der Druckschrift 199 49 909 A1 ein selbsteinstellendes Ausrücklager bekannt. Das Ausrücklager umfasst einen Innenring sowie einen Außenring, wobei an dem Innenring ein verschwenkbarer Einstellring abgestützt ist, an dessen Flanschteil Federzungen der Schalttrennkupplung kraftschlüssig anliegen. Der Einstellring kann aus Kunststoff gefertigt werden, sodass die Reibpartner aus Kunststoff und Stahl hergestellt sind. Die Werkstoffkombination ermöglicht eine Einstellbarkeit eines möglichen Spiels zwischen dem Ausrücklager und der Tellerfeder der Kupplung.

Aus der Druckschrift DE 101 25 691 A1 ist eine Anlaufscheibe für ein Ausrücklager bekannt. Das bekannte Ausrücklager weist einen drehstarr an dem Gehäuse angeordneten äußeren Lagerring und einen umlaufenden inneren Lagerring auf, der einen Ringflansch bildet, an dem die Anlaufscheibe lagefixiert ist. Die Anlaufscheibe stützt sich an Tellerfederzungen der Kupplung ab. Die Anlaufscheibe bewirkt, dass Relativbewegungen zwischen der Tellerfeder der Kupplung und dem umlaufenden Lagerring und der Anlaufscheibe selbst erfolgen.

Darüber hinaus ist aus der Druckschrift 22 40 383 ein Wälzlagerausrücker für Reibungskupplungen bekannt. Auch dieser Ausrücker weist einen umlaufenden Innenring und einen nicht umlaufenden Außenring auf, wobei der Innenring mit der Tellerfeder der Kupplung gekoppelt ist. Zwischen dem Innenring und der Kupplung ist eine Blechscheibe, welche eine Kunststoffschicht aufweist.

Schließlich ist aus der Druckschrift DE 37 43 853 A1 ein weiteres Ausrücklager bekannt. Das bekannte Ausrücklager besteht aus einem auf einer Schiebehülse angeordneten Wälzlager mit zwei konzentrischen Laufringen, zwischen denen Wälzkörper abrollen, wobei der umlaufende Innenring eine aus polymerem Werkstoff bestehende Anlaufscheibe aufweist, die beim Betrieb mit den Federzungenenden der Tellerfeder zusammenwirken.

Bei früheren Ausführungen der Ausrücklager zum Betätigen einer Kupplung war ein Stahl-Stahl-Kontakt zwischen der Tellerfeder und dem Ausrücklager gegeben. Dabei ergaben sich Probleme bezüglich des Wirkungsgrades und der auftretenden Korrosion. Deshalb wird bei den bekannten Ausrücklagern ein Stahl-Stahl-Kontakt zwischen der Tellerfeder und dem Ausrücklager nicht vorgesehen. Beispielsweise kann das Ausrücklager mit einer Kunststoffscheibe versehen werden, welche zwischen dem Ausrücklager und der Tellerfederzunge der Kupplung vorgesehen ist, um den Reibwert zwischen den Bauteilen zu reduzieren.

Neben der Reduzierung des Verschleißes ist es jedoch notwendig, dass vor Inbetriebnahme des Fahrzeuges eine radiale Zentrierung des Ausrücklagers zur Drehachse der Kupplung erfolgt. Hierfür ist jedoch eine ausreichende Reibung an den Reibflächen erforderlich. Ansonsten besteht die Gefahr, dass ein so genanntes Schlingerlager auftritt und die zentrierte Position des Ausrücklagers nicht gehalten oder erst gar nicht eingestellt werden kann.

Insgesamt ergibt sich bei den bekannten Ausrücklagern der Nachteil, dass anfangs zwar sehr geringe Reibwerte an den Reibflächen auftreten, diese jedoch nach wenigen Lastwechseln dramatisch ansteigen, wenn die Wirkung des Schmiermediums verbraucht ist. Aufgrund des reduzierten Reibwertes zwischen der Tellerfeder und der Kunststoffscheibe wird, wie bereits angedeutet, die Selbstzentrierung des Ausrücklagers erschwert.

Der vorliegenden Erfindung liegt die Aufgabe zugrunde, ein Ausrücklager zum Betätigen einer Kupplung der eingangs genannten Gattung vorzuschlagen, bei dem einerseits ein möglichst hoher Wirkungsgrad erzielt werden kann und andererseits eine Selbstzentrierung des Ausrücklagers erreicht wird.

Diese Aufgabe wird durch ein Ausrücklager zum Betätigen einer Kupplung in einem Antriebsstrang eines Fahrzeuges mit einem umlaufenden Lagerring und einem stehenden Lagerring gelöst, zwischen denen Wälzkörper geführt sind, wobei ein Lagerring über eine Scheibe mit einer Tellerfederzunge der Kupplung gekoppelt ist, wobei die der Tellerfederzunge und dem Lagerring zugewandten Flächen der Scheibe als Reibfläche wirken und wobei der Reibwert wenigstens einer Reibfläche der Scheibe zumindest zeitweise veränderbar ist.

Somit kann zunächst die Verringerung des Reibwertes durch das Kompensieren der Wirkung z. B. des Korrosionsschutzöles erreicht werden, bis eine Selbstzentrierung des Ausrücklagers erfolgt ist. Auf diese Weise kann die Kupplung in jedem Zustand das Ausrücklager in kürzester Zeit zentrieren.

Im Rahmen einer besonders vorteilhaften Weiterbildung der Erfindung kann vorgesehen sein, dass an den Reibflächen der aus Kunststoff oder dergleichen gefertigten Scheibe zumindest segmentweise eine Textur oder dergleichen zur kurzzeitigen Erhöhung des Reibwertes derart vorgesehen ist, dass die Rauhigkeit an der jeweiligen Reibfläche nach fortschreitender Betriebsdauer wieder verringert wird. Beispielsweise kann nach erfolgter Zentrierung die Rauhigkeit bzw. der Reibwert an den Reibflächen wieder verringert werden, sodass der Wirkungsgrad erhöht wird.

Vorzugsweise kann die Textur eine sägezahnförmige Oberfläche oder dergleichen an der gesamten oder auch an Teilen der Oberfläche der Reibflächen aufweisen. Damit wird eine ebene aber raue Oberfläche an den Reibflächen erzeugt, sodass eine möglichst hohe Anfangsreibung realisiert wird, die jedoch nach kurzer Betriebsdauer durch das radiale Gleiten der Tellerfederzungen relativ schnell geglättet wird. Auf diese Weise kann nach erfolgter Selbstzentrierung des Ausrücklagers die Rauhigkeit wieder reduziert werden, sodass der Wirkungsgrad erhöht wird.

Gemäß einer Weiterbildung kann die jeweilige Reibfläche eine Rauhigkeit von etwa 10 bis 40 µm aufweisen. Es sind auch andere Rauhigkeiten denkbar. Insbesondere ist es möglich, dass die Reibflächen an mehreren Umfangssegmenten aufgeraut werden und somit nicht die gesamte Reibfläche bearbeitet werden muss, um die Textur aufzubringen.

Eine weitere Variante der vorliegenden Erfindung, welche insbesondere auch mit der vorgenannten Variante kombiniert werden kann, kann vorgesehen, dass ein Reibwert erhöhendes Medium auf zumindest einer Reibfläche vorgesehen wird. Das haftende Medium kann die Wirkung des üblicherweise aufgetragenen Korrosionsschutzöls kompensieren, um zunächst eine Zentrierung zu ermöglichen. Dabei ist entscheidend, dass dieses Haftmedium nur für kurze Zeit wirksam ist, sodass der Reibwert nach erfolgter Zentrierung wieder verringert wird. Beispielsweise kann das Haftmedium eine Paste mit Festkörpern oder dergleichen sein, welche an der Kontaktzone bzw. an den Reibflächen nach kurzem Betrieb sich wieder entfernt.

Eine Weiterbildung der vorliegenden Erfindung kann vorsehen, dass als Medium ein Lack verwendet wird, welcher vorzugsweise unter UV-Licht aushärtet. Dieser Lack kann z. B. auf die Reibflächen aufgesprüht werden und unter UV-Licht aushärten, sodass sich dann der Reibwert kurzfristig an den Reibflächen z. B. verdoppelt. Vorzugsweise kann der Lack auch aufgewalzt werden und dann durch eine Lichtanlage geführt werden, um eine Aushärtung des Lackes zu erreichen.

Möglicherweise kann als Medium auch eine Gummierung oder ein Klebstoff verwendet werden. Derartige Werkstoffe sind Gummi- oder Latexüberzüge, welche mittels einer wässrigen Lösung auf das Bauteil aufgebracht werden können und anschließend durch Erhitzen auf der Reibfläche vernetzt werden.

Insgesamt sollte bei der Verwendung eines reibwerterhöhenden Mediums eine Schichtdicke von etwa einem Mikrometer oder dergleichen auf die jeweilige Reibfläche aufgetragen werden.

Nachfolgend wird die vorliegende Erfindung anhand der Zeichnung näher erläutert.

Es zeigen:
- Figur 1: eine dreidimensionale schematische Teilansicht eines Ausrücklagers mit den verschiedenen möglichen Reibflächen zwischen dem Ausrücklager und der Tellerfeder der Kupplung;
- Figur 2: eine schematische Ansicht einer Kunststoffscheibe eines erfindungsgemäßen Ausrücklagers mit über den gesamten Umfang aufgerauhter Oberfläche;
- Figur 3: eine schematische Ansicht der Kunststoffscheibe mit segmentweise aufgerauten Bereichen; und
- Figur 4: eine vergrößerte Teilansicht einer aufgerauten Reibfläche mit sägezahnförmiger Oberfläche.

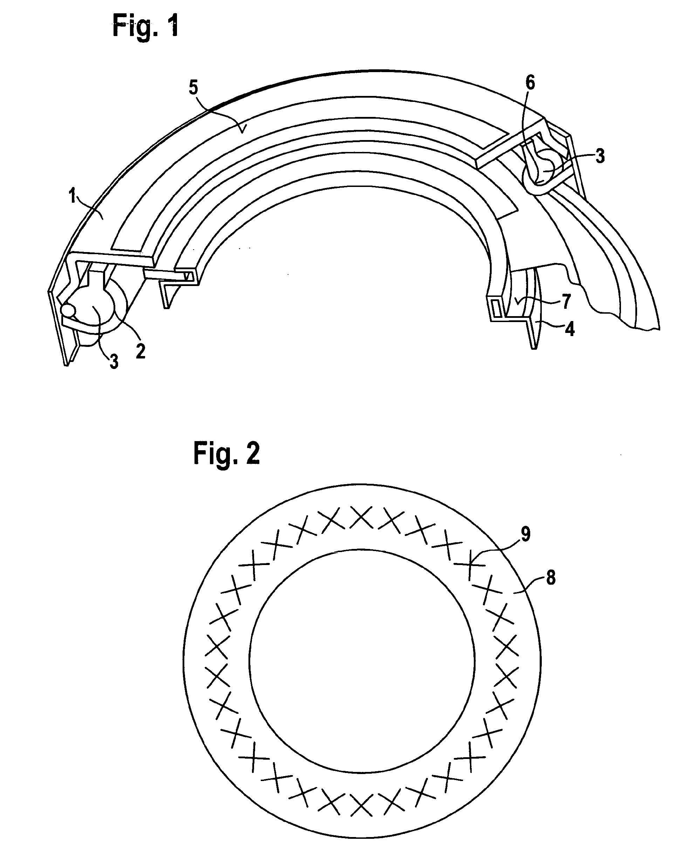

In Figur 1 ist eine mögliche Ausführungsform eines erfindungsgemäßen Ausrücklagers zum Betätigen einer nicht weiter dargestellten Kupplung in einem Antriebsstrang eines Fahrzeuges gezeigt. Das Ausrücklager weist einen äußeren Lagerring 1 und einen inneren Lagerring 2 auf, welche über Wälzkörper 3 aneinander gelagert sind. Ferner ist ein Haltering 4 zwischen dem äußeren Lagerring 1 und dem inneren Lagerring 2 vorgesehen. Mit der Bezugszahl 5 ist die Reibfläche zwischen dem äußeren Lagerring 1 und einer nicht weiter dargestellten Tellerfeder der Kupplung bezeichnet. Ferner ist mit der Bezugszahl 6 die Reibfläche zwischen der Tellerfeder und dem inneren Lagerring 2 gekennzeichnet. Ferner ist durch die Bezugszahl 7 die Reibfläche zwischen einem inneren Lagerring 2 und dem Haltering 4 gekennzeichnet.

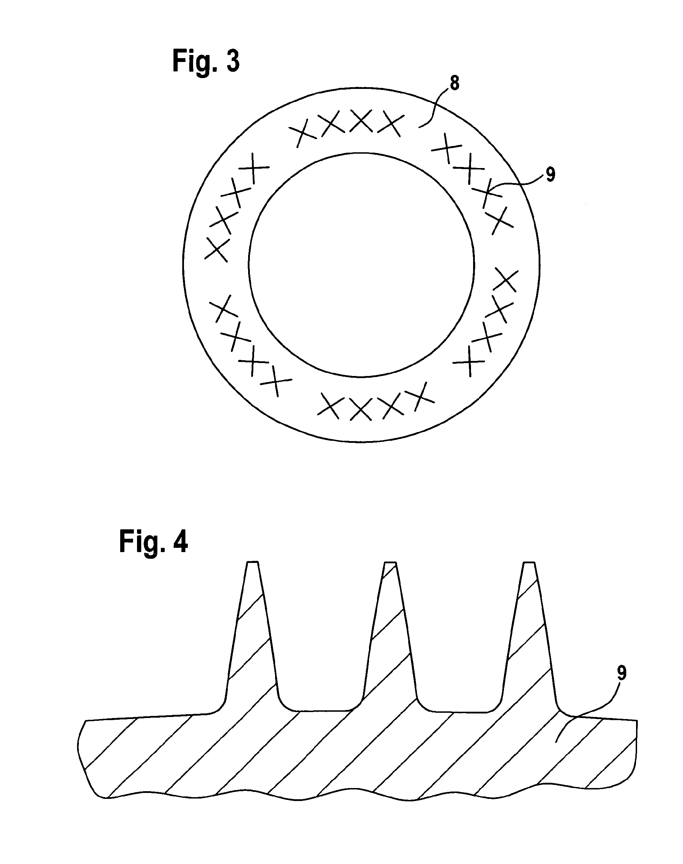

In Figur 2 ist eine mögliche Ausführung einer Kunststoffscheibe 8 gezeigt, welche zwischen dem Ausrücklager und der Tellerfeder der Kupplung vorgesehen ist. Die Oberfläche der Kunststoffscheibe wirkt als Reibfläche und ist wie in Figur 2 gezeigt, mit einer Textur versehen, sodass über den gesamten Umfang ein aufgerauter Bereich vorgesehen ist. In Figur 3 ist eine alternative Ausführung der Kunststoffscheibe 8 dargestellt, bei der segmentweise mehrere aufgerauhte Bereiche 9 über den gesamten Umfang der Reibfläche verteilt sind.

In Figur 4 ist eine vergrößerte Teilansicht der Oberfläche der Reibfläche gezeigt. Aus dieser Ansicht wird deutlich, dass der aufgeraute Bereich 9 eine etwa sägezahnförmige Ausgestaltung aufweist.

### Bezugszeichenliste

- 1.: äußerer Lagerring
- 2.: innerer Lagerring
- 3.: Wälzkörper
- 4.: Haltering
- 5.: Reibfläche zwischen äußerem Lagerring und Tellerfeder
- 6.: Reibfläche zwischen innerem Lagerring und Tellerfeder
- 7.: Reibfläche zwischen innerem Lagerring und Haltering
- 8.: Kunststoffscheibe
- 9.: aufgerauhter Bereich

## Patentansprüche

1. Ausrücklager zum Betätigen einer Kupplung in einem Antriebsstrang eines Fahrzeuges mit einem umlaufenden Lagerring und einem stehenden Lagerring, zwischen denen Wälzkörper geführt sind, wobei zumindest ein Lagerring über eine Scheibe mit einer Tellerfeder der Kupplung gekoppelt ist und wobei die der Tellerfeder und dem Lagerring zugewandten Flächen der Scheibe als Reibflächen wirken, **dadurch gekennzeichnet, dass** der Reibwert wenigstens einer oder eines Teils einer Reibfläche der Scheibe (8) zumindest zeitweise veränderbar ist.

2. Ausrücklager nach Anspruch 1, **dadurch gekennzeichnet, dass** an den Reibflächen der aus Kunststoff gefertigten Scheibe (8) zumindest segmentweise eine Textur zur Erhöhung des Reibwertes derart vorgesehen ist, dass die Rauhigkeit an der jeweiligen Reibfläche über die Betriebsdauer verringert wird.

3. Ausrücklager nach Anspruch 2, **dadurch gekennzeichnet, dass** die Textur eine sägezahnförmige Oberfläche aufweist.

4. Ausrücklager nach Anspruch 2, **dadurch gekennzeichnet, dass** die Textur eine Rauhigkeit an der jeweiligen Reibfläche von etwa 10 bis 40 µm aufweist.

5. Ausrücklager nach Anspruch 2, **dadurch gekennzeichnet, dass** die Reibflächen über den Umfang mehrere aufgerauhte Bereiche (9) als Textur aufweisen.

6. Ausrücklager nach Anspruch 1, **dadurch gekennzeichnet, dass** ein reibwerterhöhendes Medium auf zumindest einer Reibfläche vorgesehen ist.

7. Ausrücklager nach Anspruch 6, **dadurch gekennzeichnet, dass** als Medium ein unter UV-Licht aushärtender Lack vorgesehen ist.

8. Ausrücklager nach Anspruch 6, **dadurch gekennzeichnet, dass** als Medium eine Gummierung und/oder ein Klebstoff vorgesehen ist.

9. Ausrücklager nach einem der Anspruch 6, **dadurch gekennzeichnet, dass** das Medium in einer Schichtdicke von etwa 1 µm auf die jeweilige Reibfläche aufgetragen ist.
